# EUROPEAN PATENT APPLICATION

(11) **EP 2 363 795 A1**
(43) Date of publication of application: **07.09.2011**
(21) Application number: 10155627.2
(22) Date of filing: 05.03.2010
(51) Int. Cl.: G06F 3/06, G06F 17/30, H04L 29/08

(54) **A method and a system for providing a user with a virtual external storage**

(71) Applicant: Dunker, Sven, 82110 Germering (DE)
(72) Inventor: Dunker, Sven, 82110 Germering (DE)

(57) **Abstract**

The invention relates to a data upload apparatus and a method for providing a user with a virtual external storage (VES) for storing data, said data upload apparatus (5) comprising: at least one cache memory (5A) for caching temporarily user data provided by a client device (4) of said user, and a control unit (5B) for streaming automatically in the background said user data cached in said cache memory (5A) via a data link to an internet storage farm (3) which stores said user data for access by the same or another user according to access rights.

## Description

A method and a system for providing a user with a virtual external storage

The invention relates to a method and a system for providing a user with a virtual external storage and in particular a data upload apparatus for a user.

Storing and reading data of users on client computers such as personal computers and notebooks is usually done on embedded storage media such as hard disk drives or flash memory devices.

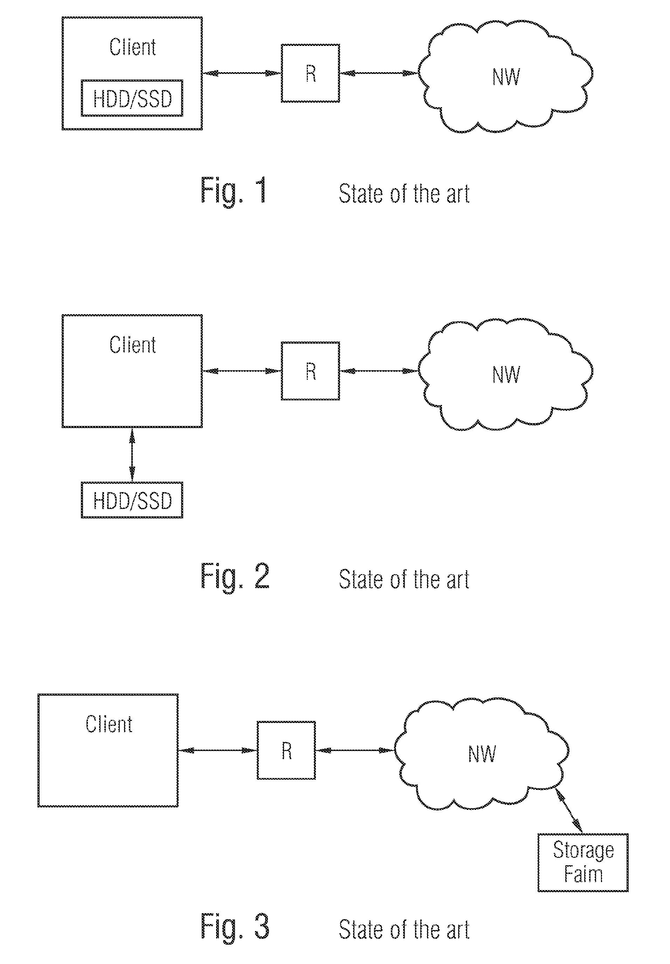

Fig. 1 illustrates the storage of data of a user on a hard disk drive or on a flash memory of a client device connected via a router R to a data network NW. Since the memory space of an embedded storage medium such as shown in Fig. 1 is restricted a conventional client device can also be connected to an external storage device such as an external hard disk drive HDD or an external flash memory SSD as shown in Fig. 2. It is widely established to provide a client device with an integrated embedded storage medium to store user data or to connect the client device to an external storage device wherein the client device can further be connected by a wireless or wired link to a data network such as internet. The provision of an external storage medium such as an external hard disk drive increases the local available storage capacity for user data of a user which can be saved on the storage device locally. A flash memory SSD can provide greater robustness than hard disk drives HDD since no moving parts are embedded. However, flash memories only provide much lower data storage capacity than hard disk drives for comparable costs.

However, even when providing an external storage device such as shown in the conventional arrangement of Fig. 2 the available storage capacity for a user having a client device is still limited. Accordingly a system has been proposed such as shown in Fig. 3. In this system user data of a user can be saved directly from the client-device via a network such as the internet to a storage farm of an online storage provider. This way to store data is also called cloud computing wherein the user data of the user are basically outsourced from a data storage of the client device of the user to an external memory of the internet storage farm. The user can register himself at an online storage provider and can reserve for himself a predetermined storage capacity in the storage farm.

The conventional ways of storing user data according to the state of the art as shown in Fig. 1 to 3 have several drawbacks.

The Embedded storage medium such as shown in Fig. 1 provides the user of the client computer or client device only with a very limited storage capacity so that the user might not be able to store all user data in particular content data such as audio or video data on his local memory integrated in his client computer or client device. A connection of an external hard disk drive HDD as shown in Fig. 2 makes it possible to increase the storage capacity to store more data, however, external hard disk drives HDD carry several problems for the end user and also for the manufacturer during the usage. External hard disk drives HDD are usually mechanic-electronic devices where chances of failure purely driven by the way of usage result in higher field failure rates and in a higher potential loss of data. End users who save their user data such as family pictures or audio files on the external storage device risk to loose all those user data if the external storage device becomes defect. Accordingly, with the arrangement shown in Fig. 2 the risk of loosing user data is comparatively high for the respective user. In the arrangement of Fig. 1 the user data is furthermore only available locally at the location of the client device. In the arrangement shown in Fig. 2 a user who wishes to access his user data at another location has only the possibility to carry the external storage device with him. With respect to mobility external storage devices such as an external hard disk drive HDD usually stay at home so that the access to the user data is very limited and not possible if the user is for instance travelling to another location. Another disadvantage of the arrangement as shown in Fig. 2 resides in its limited scalability. In case that the external storage memory is full the user has to purchase another external storage device such as an external hard disk drive HDD so that the user data is spread over several different storage media. Also the number of external storage devices being connectable to a client device of the user is normally limited.

Utilizing a cloud storage arrangement as shown in Fig. 3 overcomes some of the disadvantages of the standard external storage medium arrangement as shown in Fig. 2, however, the data storage system of Fig. 3 has other drawbacks. The usability of all personal data of the user is consumer or user unfriendly, because it takes too much time to directly upload a huge amount of user data via the internet to the storage farm. The main reason for this long uploading time is the limited bandwidth of the data link between the client device and the network. The data link between the client device and the network can as shown in Figs. 1 to 3 comprise a router R forwarding data packets of the client device to a server within the storage farm. The bandwidth of the physically communication links between the client and the router as well as between the router and the network are limited thus restricting the possible data rates. Moreover in many data transmission protocols the bandwidth allocated to the downlink are often higher than the allocated bandwidth assigned to the uplink. Accordingly, more bandwidth is allocated in many communication protocols for downloading data from the network to the client device than for uploading data from the client device to the network. Consequently the data link between the client device and the network forms a bottleneck for uploading of user data to the storage farm. Therefore a user who wishes to upload user data, in particular content data such as audio video data, has normally to wait a long time until his user data is uploaded from his client device to the reserved memory space within the storage farm.

Accordingly it is an object of the present invention to provide a method and an apparatus which overcome the drawbacks of the conventional data storage systems and which minimize the time necessary for storing user data.

This object is achieved by a data upload apparatus (DOA) comprising the features of claim 1.

The invention provides a data upload apparatus (DOA) for providing a user with a virtual external storage (VES) for storing data,
said data upload apparatus comprising:
at least one cache memory for caching temporarily user data provided by a client device of the user, and
a control unit for streaming automatically said user data cached in said cache memory via a data link to an internet storage farm which stores the user data for access by the same or by another user according to access rights.

In a possible embodiment of the data upload apparatus according to the present invention the user data cached in the cache memory is provided by a client device of the user via an interface between the client device and the data upload apparatus.

In a possible embodiment of the data upload apparatus the data upload apparatus is connected via the interface to the client device of the user.

In an alternative embodiment the data upload apparatus is integrated in the client device of the user.

In a possible embodiment of the data upload apparatus according to the present invention the control unit streams the user data in the background via the data link to the internet storage farm having a server connected to a plurality of data memories wherein the IP address of the server is stored as configuration data in a memory of the data upload apparatus or in a memory card insertable into said data upload apparatus.

In a possible embodiment the server of the internet storage farm is formed by a RAID server.

In a possible embodiment of the data upload apparatus according to the present invention the cache memory is a non-volatile memory.

In a preferred embodiment of the data upload apparatus according to the present invention the non-volatile cache memory is formed by a flash memory.

In a possible embodiment of the data upload apparatus according to the present invention the data upload apparatus is connected to a router which links the client device of the user to the internet.

In a further possible embodiment of the data upload apparatus according to the present invention the data upload apparatus is integrated in a router which links the client device of the user to the internet.

In a possible embodiment of the data upload apparatus according to the present invention the cache memory is integrated in the data upload apparatus.

In an alternative embodiment the cache memory is provided within a memory card which is insertable in the data upload apparatus.

In a possible embodiment of the data upload apparatus according to the present invention the client device is a mobile or a not mobile device connected by a wireless or wired link via a router and the internet to the internet storage farm.

In a possible embodiment of the data upload apparatus according to the present invention the data upload apparatus comprises an encryption unit which encrypts the cached user data before streaming the user data to the internet storage farm.

This embodiment has the advantage that the data security against unauthorized use of private user data stored in the internet storage farm is increased.

In a possible embodiment of the data upload apparatus according to the present invention user data of a user stored in the internet storage farm is downloadable by a client device of the same user or by a client device of another user via an access network connected to the internet.

The invention further provides a method for performing a data upload of user data to a virtual external storage,
wherein the method comprises the following steps:
storing user data of a user provided by a client device of the user temporarily in a cache memory of a data upload apparatus; and
streaming the user data stored in the cache memory of the data upload apparatus automatically to an internet storage farm which stores the user data permanently for access by the same or by another user according to access rights.

In a possible embodiment of the method according to the present invention access rights to access user data of the user stored in the internet storage farm are assigned by the user himself.

In an alternative embodiment of the method according to the present invention the access rights to access user data of a user stored in the internet storage farm are assigned by the provider of said internet storage farm.

The invention further provides a content data sharing system for sharing content data between users comprising at least one data upload apparatus comprising
at least one cache memory for caching temporarily user data provided by a client device of the user and
a control unit for streaming automatically in the background the user data cached in the cache memory via a data link to an internet storage farm which stores said user data for access by the same or by another user according to access rights.

In a possible embodiment of the system according to the present invention each user has at least one client device connected to a data upload apparatus for providing the respective user with a virtual external storage (VES) for storing data
wherein the data upload apparatus comprises:
at least one cache memory for caching temporarily user data provided by a client device of the respective user and
a control unit for streaming automatically in the background the user data cached in the cache memory via a data link to an internet storage farm which stores the user data for access by the same user or by another user according to access rights.

In the following possible embodiments of the system and method for performing a data upload of user data to a virtual external storage are described with reference to the enclosed figures.
- Figs. 1-3: show conventional data storage arrangements according to the state of the art;
- Fig. 4: shows a first embodiment of a system comprising a data upload apparatus for providing a user with a virtual external storage according to the present invention;
- Fig. 5: shows a further embodiment of a system comprising a data upload apparatus for providing user with a virtual external storage according to the present invention;
- Fig. 6: shows a further system comprising a data upload apparatus for providing a user with a virtual external storage according to the present invention;
- Fig. 7: shows a further embodiment of the system comprising a data upload apparatus providing a user with a virtual external storage according to the present invention;
- Fig. 8: shows a further embodiment of the system comprising a data upload apparatus for providing a user with a virtual external storage according to the present invention;
- Fig. 9: shows a further embodiment of the system comprising a data upload apparatus for providing a user with a virtual external storage according to the present invention;
- Fig. 10: shows a block diagram of a possible embodiment of a data upload apparatus according to the present invention;
- Fig. 11: shows a block diagram of a further embodiment of a data upload apparatus according to the present invention;
- Fig. 12: shows a flowchart of a possible embodiment of a method for performing a data upload of user data to a virtual external storage according to the present invention.

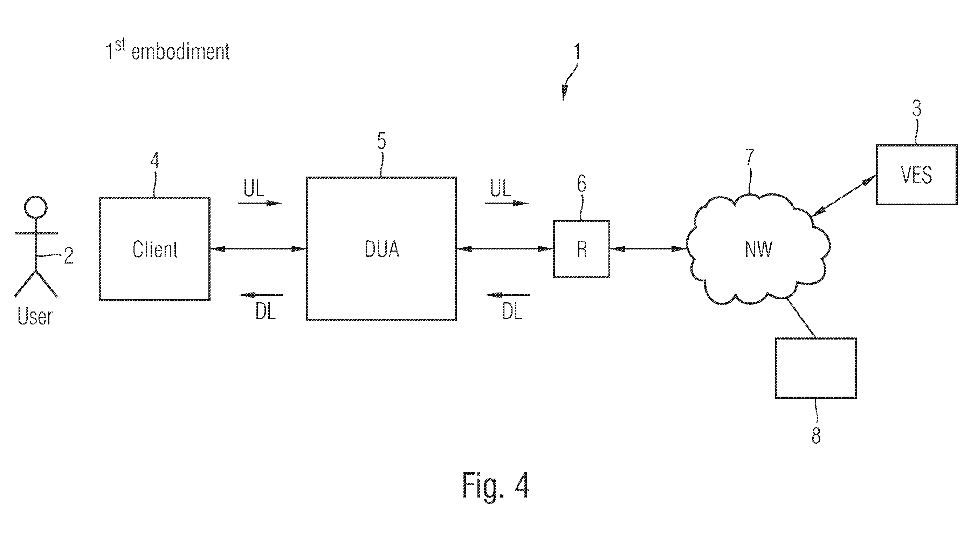

As can be seen in Fig. 4 the system 1 for providing a user 2 is a virtual external storage VES comprises internet storage farm 3 for storing user data of the user 2 for access by the same user 2 or by another user according to access rights. The internet storage farm 3 comprises in a possible embodiment a server such as a RAID server being connected to a predetermined number of data memories which can be formed by hard disk drives HDD. Fig. 2 shows a client device 4 which can comprise a local data memory for storing user data such as content data, in particular video and audio data of the user. The client device 4 can be a stationary or portable computer device. The client device 4 can be a mobile device such as a mobile phone or a mobile internet device. Furthermore, the client device 4 can also be an internet TV or an internet capable device or a play station. The client device 4 is connected via a wireless or wired link to a data upload apparatus 5 according to the present invention for providing the user 2 with a virtual external storage VES in the internet storage farm 3. In the embodiment shown in Fig. 4 the data upload apparatus 5 is connected via a wireless or wired link to a router 6 providing access to a data network 7. The data network 7 is in a preferred embodiment the internet. In the embodiment shown in Fig. 4 one internet storage farm 3 is connected to the internet 7 for providing a virtual external storage VES for the user 2. In a possible embodiment more than one internet storage farms 3 can be connected to the internet 7 which can be accessed by the user 2. The user data which can be stored in a local memory of the client device 4 is supplied by the client device 4 to the data upload apparatus DUA 5 which comprise at least one cache memory for storing temporarily the supplied user data of the user 2. The data upload apparatus 5 further comprises a control unit for streaming automatically in the background the user data cached in the cache memory via the data link and the internet 7 to the internet storage farm 3 which stores the user data permanently for later access by the same user 2 or by another user according to access rights. These access rights are assigned to the user data in a possible embodiment by the user 2. In an alternative embodiment the access rights to the user data of the user 2 are assigned by the provider of the online storage service of the internet storage farm 3. The access rights can for example allow the user 2 to listen stored audio data or to copy the user data. In a possible embodiment the user data is stored in the internet storage farm 3 permanently. In an alternative embodiment the user data is stored in the internet storage farm 3 for a predetermined period of time. In a possible embodiment the predetermined storage time for storing the user data is set by the user 2 or by the online storage service provider of the internet storage farm 3.

In a possible embodiment a server 8 is connected to the network 7 wherein the server 8 is a server of an online content data store providing users with content data such as music files or video files. In a possible embodiment the user 2 can access the content data provided by the server 8 and download the content data to the local memory of the client device 4 for further use. In a possible embodiment the downloaded content data such as a music file is then automatically loaded by the data upload apparatus 5 of the user 2 to the internet storage farm 3 for example as a backup. In a possible embodiment the downloaded content data received from the data storage server 8 is first stored in the local memory of the client device 4 and then supplied to the data upload apparatus 5 to upload the data to the internet storage farm 3. In an alternative embodiment the purchased content data of the online storage server 8 is uploaded by the data upload apparatus 5 automatically to the internet storage farm 3 before the downloaded data is stored in the local memory of the client device 4. In a further step the user 2 can then download data from the internet storage farm 3 to the local memory of the client device 4 or get the downloaded content data of the storage server 8 from the cache memory of the data upload apparatus 5. In a still further embodiment the purchased content data of the storage server 8 is sent by the data upload apparatus 5 back via the router 6 to the internet storage farm 3 without caching the purchased content data. After the user has input a corresponding instruction the purchased content data is then downloaded from the internet storage farm 3 via the data upload apparatus 5 to the local data memory of the client device 4.

The control unit integrated in the data upload apparatus 5 can be a microprocessor executing a corresponding control program or can be formed by a hardwired ASIC chip. The control unit streams the user data stored in a local data memory of the client device 4 of the user 2 automatically in the background to the online storage farm 3. Data streaming and saving in the cloud is done in the background and is not recognized or observed by the user 2. Therefore the user 2 does not notice the data saving process such as with a conventional standard external storage as shown in Fig. 2 while the user data is streamed to the internet storage farm 2. To be able to perform the upstreaming of the user data the data upload apparatus 5 has to be connected at least from time to time with the internet 7. This can be achieved via different kinds of data links. Once the user wants to save user data on his virtual external storage VES the user data is first stored on the embedded cache memory of the data upload apparatus 5 and then automatically forwarded to the internet storage farm 3. The upload of the data can be performed by the control unit of the data upload apparatus 5 in the background of other application programs running on the client device 4 without that the user 2 takes notice of the upload data process. The upload data process is not stopped even when the client device 4 of the user 2 is switched off.

In a possible embodiment of the data upload apparatus 5 according to the present invention the apparatus 5 is supplied with power from its own power supply source which can be supplied by the electrical grid or by a battery or accumulator insertable into the data upload apparatus 5. In a further embodiment the power supply of the data upload apparatus 5 is performed from the network side.

In a possible embodiment the data upload apparatus 5 according to the present invention comprises a light emitting diode LED indicating to the user 2 that the data upload process is in progress and that user data is uploaded to a internet storage farm 3. In a possible embodiment the control unit of the data upload apparatus 5 streams the user data in the background via the data link to the internet storage farm 3 wherein the IP address of a server of the internet storage farm 3 is stored as configuration data in a memory of the data upload apparatus 5. This memory can be a configuration memory of the data upload apparatus 5. In a further embodiment the configuration data is stored in a memory card insertable into the data upload apparatus 5.

In the first embodiment shown in Fig. 4 the data upload apparatus 5 comprises a first interface to the client device 4 and a second interface to the router 6.

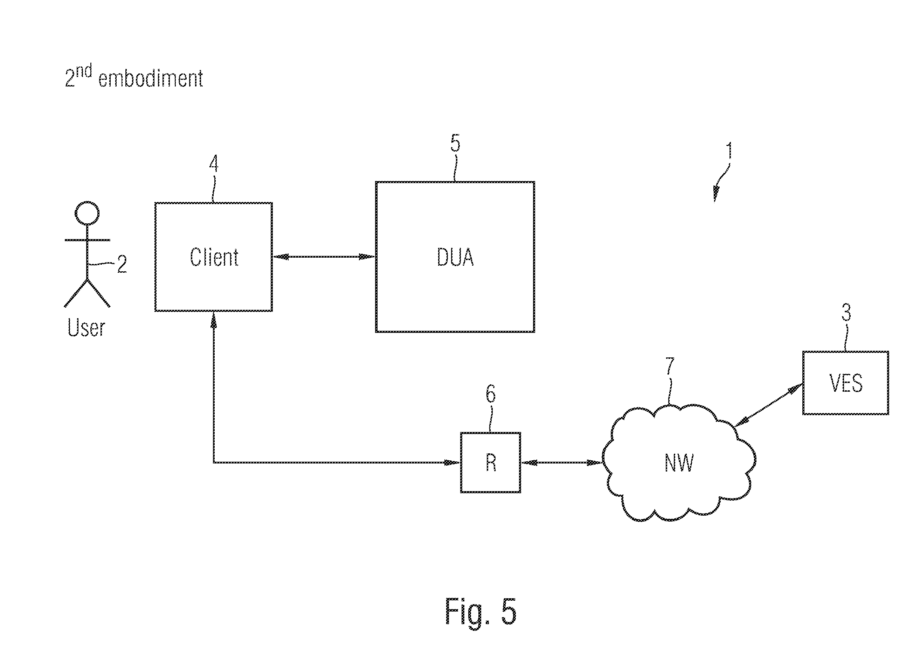

In a second embodiment shown the Fig. 5 the data upload apparatus 5 is connected via one interface to the client device 4. The upload user data is transmitted by the client device 4 to the data upload apparatus 5 which forwards the user data cached in the cache memory back to the client device 4 and to the router 6. On the router 6 the upload userdata is then further transmitted via the network 7 to the internet storage farm 3. In a possible embodiment the data upload apparatus 5 as shown in Fig. 5 can be integrated in a stick such as an USB stick which is inserted into a slot of the client device 4.

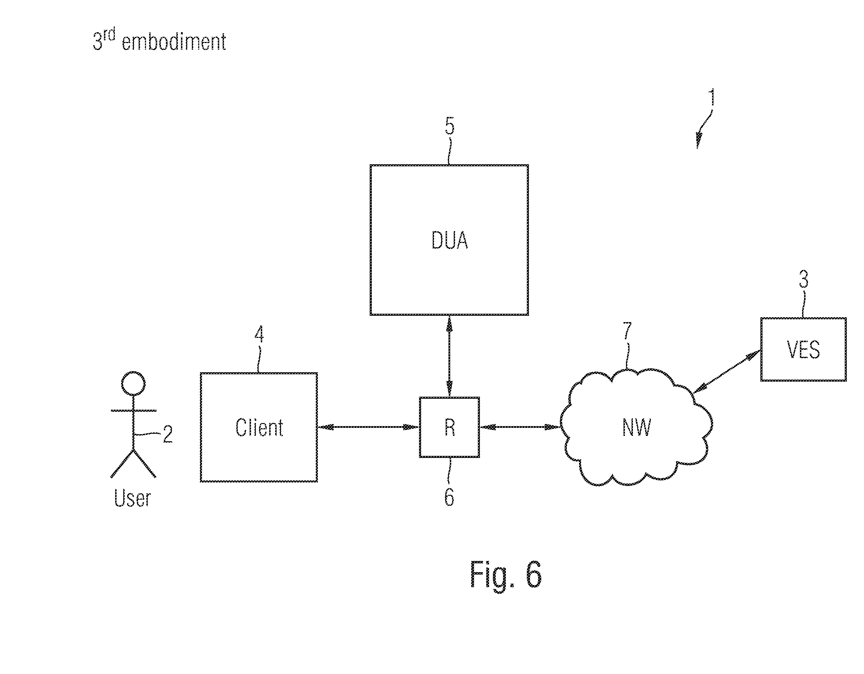

In a third embodiment of the data storage system 1 as shown in Fig. 6 the data upload apparatus 5 according to the present invention is not connected to the client device 4 but to the router 6 providing a data link for the client device 4 to the network 7. In this embodiment the router 6 comprises a first interface for connection of the client device 4, a second interface for connection of the router 6 to the internet 7 and a third interface for connection of the data upload apparatus 5 to the router 6.

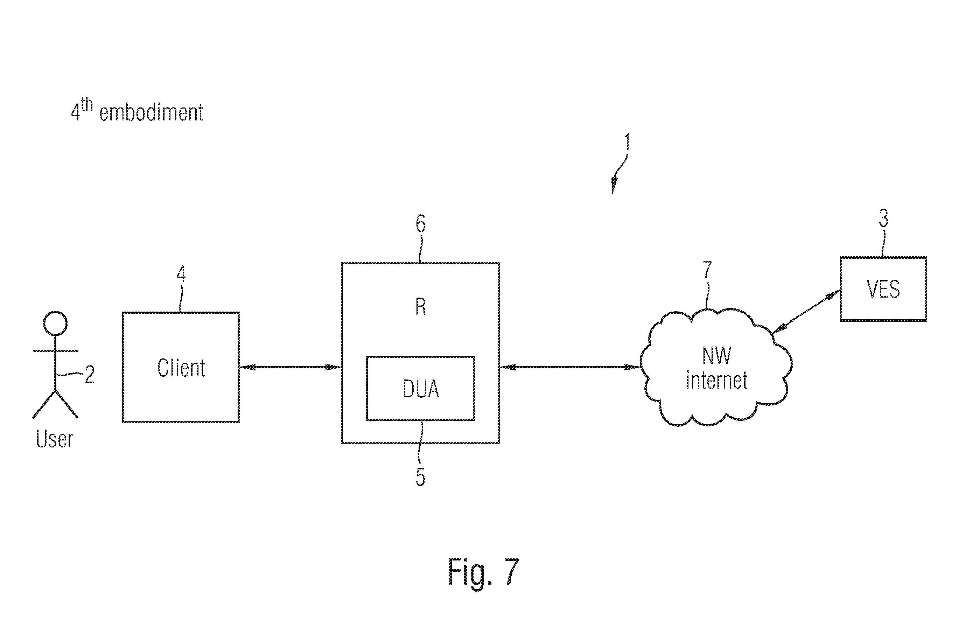

Fig. 7 shows a forth embodiment of a data storage system 1 comprising a data upload apparatus 5 according to the present invention. In this embodiment the data upload apparatus 5 according to the present invention is not connected as an external device to the router 6 but is integrated in the router 6. In a possible embodiment the data upload apparatus 5 as shown in Fig. 7 can be inserted into a slot of the router 6. The router 6 can be connected to the client device 4 and the internet 7 via wireless or wired data links. In a possible embodiment the router device 6 is a mobile device. In an alternative embodiment the router device 6 is a fixed non-portable device.

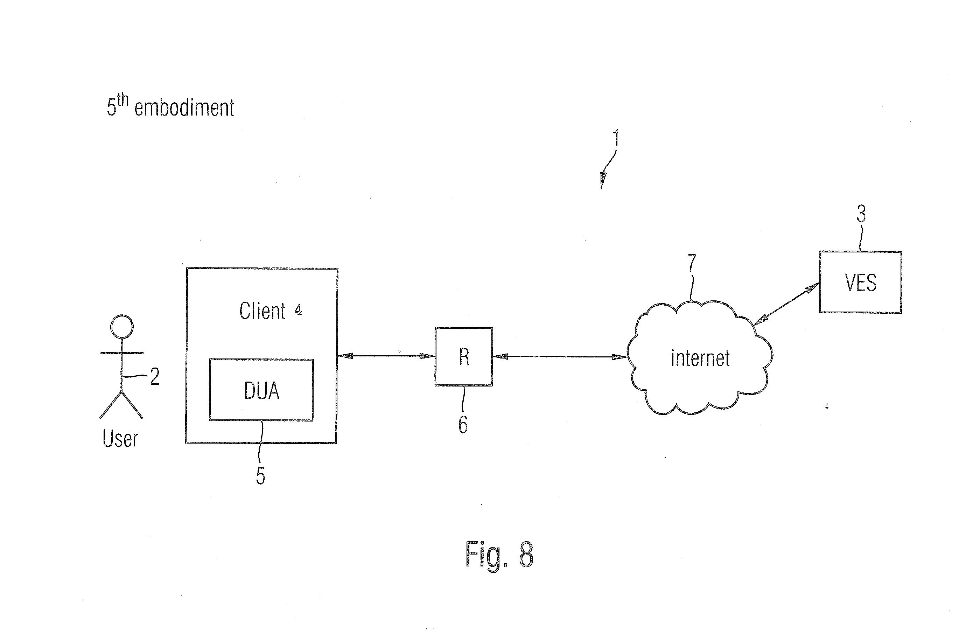

Fig. 8 shows a fifth embodiment of a data storage system 1 comprising a data upload apparatus 5 according to the present invention. In this embodiment the data upload apparatus 5 according to the present invention is integrated in the client device 4 of the user 2. In a possible embodiment the client device 4 is formed by a Smartphone. In this embodiment the data upload apparatus 5 according to the present invention is embedded directly into the Smartphone technology of the Smartphone. In a possible embodiment the internal storage of the Smartphone can be used as the cache memory of the data upload apparatus 5 to upstream data to the internet storage farm 3. The client device 4 can be any kind of client device such as a client computer, a PC, a notebook, a laptop, a PDA, a mobile phone, a mobile internet device, a set box, an internet TV or a play station.

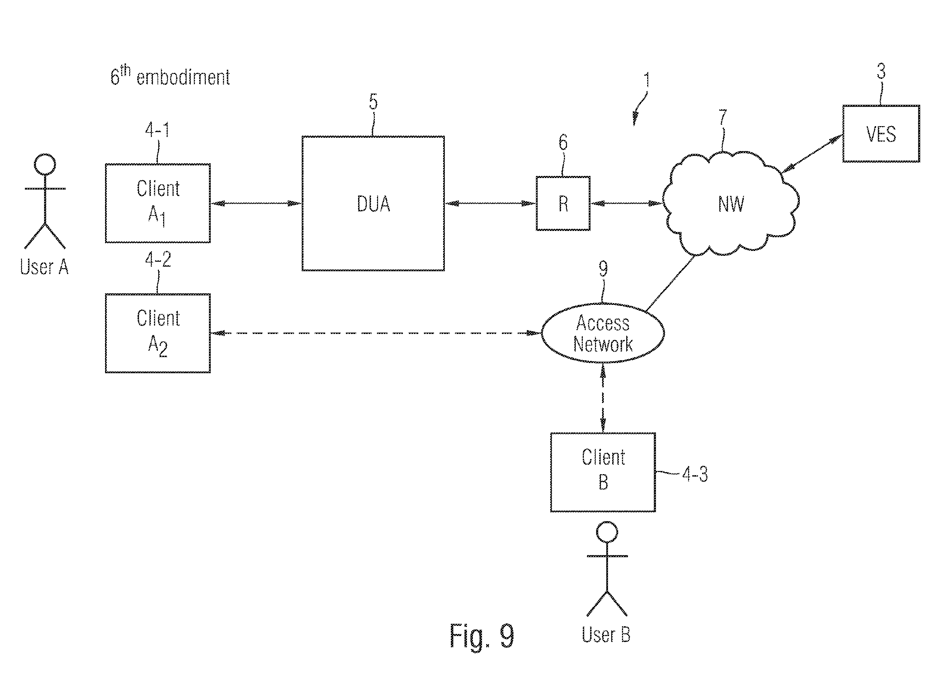

Fig. 9 shows a sixth embodiment of a storage system 1 comprising a data upload apparatus 5 according to the present invention. In this exemplary embodiment a user A has two client devices 4-1, 4-2 for example a not-portable client computer 4-1 and a mobile phone 4-2. The first client device 4-1 of the user A is connected via the data upload apparatus 5 according to the present invention and a router 6 to the internet 7. The second mobile client device 4-2 of the user A is connected via an access network 9 to the network 7. User data to be saved by the user A in the virtual external storage VES can be for example an address book of personal contacts of the user A. This contact data can be stored in a local data memory of the client computer device 4-1 of the user A. The user A stores this contact data in the internet storage farm 3 by means of the data upload apparatus 5 according to the present invention. When the user A for example leaves his home and takes another client device 4-2 along with him he can download the user data stored in the internet storage farm 3 via the access network 9 as shown in Fig. 9. For example the user A can use his mobile phone device 4-2 for downloading a personal contact list or a calendar uploaded to the internet storage farm 3 during a voyage or when travelling abroad. The access network 9 can be any kind of mobile phone access network for example an UMTS access network. Furthermore the access network can be a mobile IP access network such as WIMAX. As can be seen from the embodiment shown in Fig. 9 the user A has access to all his personal user data uploaded from his home client device 4-1 to the internet storage farm 3 when using his mobile client device 4-2 outside his home. The user A can use a predetermined storage capacity satisfying his requirements without the need of connecting one or several external search devices to his client device 4-1. Since the upload of his personal user data is performed in the background automatically by the data upload apparatus 5 the user A can initiate the upload process for uploading the data to the internet storage farm 3 and then switch-off his client home device 4-1 in a short period of time, e.g. within ten seconds after the user data has been cached by the cache memory of the data upload apparatus 5. If a local data memory within the client device 4-1 fails and the user A has to replace it by another local data memory he can download the uploaded personal user data as backup data. Moreover the user A has access to his personal user data independent of this location by using the mobile client device 4-2 when downloading the desired personal user data via the access network 9.

The system 1 as shown in Fig. 9 not only allows to access one's own user data at any location but also to share one's user data with other users. For example another user B can download uploaded user data of user A stored in the internet storage farm 3 according to assigned access rights via the access network 9 and the internet 7. The access rights to the personal user data of user A can be assigned by user A or by the service provider of the internet storage farm 3. In a possible embodiment the user A can give user B the access right to listen to music files uploaded by the user A to the virtual external storage VES provided by the internet storage farm 3. In another embodiment the user A can allow the user B not only to listen to the music files but also to copy them to the client device 4-3 of user B.

In a possible embodiment both users A, B can negotiate access rights to their respective uploaded user data via the same or different access networks and the network 7. The user A can get the access rights by user B to listen to the music files of user B in exchange for the access right given by user A to user B to listen to music files of user A stored in the internet storage farm 3. In alternative embodiment user A can send a request or command giving user B certain access rights to the user data of user A. In the embodiment shown in Fig. 9 user A has a data upload apparatus 5 for connecting a client device 4-1 of user A via the router 6 to the network 7. In a possible embodiment user B can also have a data upload apparatus of his own for connecting a further client device of user B via a router to the network 7. In a possible embodiment every user of a plurality of users has a data upload apparatus 5 for uploading data to the internet storage farm 3.

In a possible embodiment the data upload apparatus 5 comprises a docking station for one or several client devices 4-i. This docking station can for example be used for a mobile phone of the respective user.

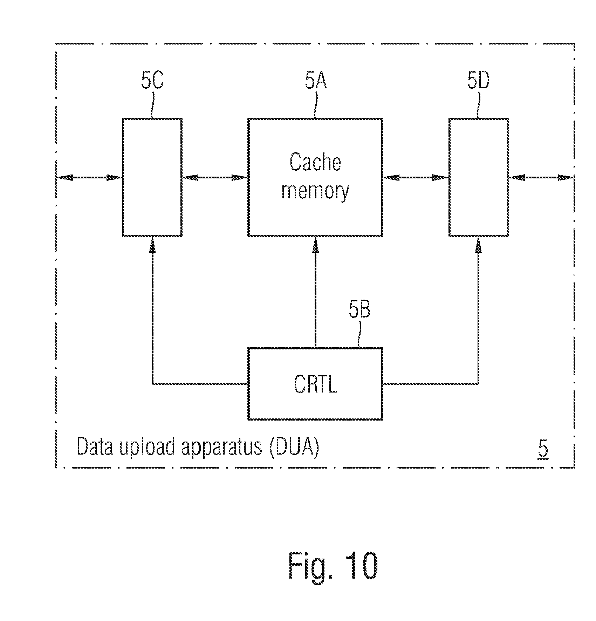

Fig. 10 shows a block diagram of a possible embodiment of a data upload apparatus 5 according to the present invention. In the shown embodiment the data upload apparatus 5 comprises at least one cache memory 5A for storing temporarily user data provided by a client device 4 of the user. The data upload apparatus 5 further comprises a control unit 5B for controlling the cache memory 5A as well as a first interface 5C and a second interface 5D. The data upload apparatus 5 as shown in the embodiment of Fig. 10 can be connected via the first interface 5C to the client device 4 and via the second interface 5D to the router 6 as shown in the arrangement of Fig. 4. In this embodiment the data upload apparatus 5 is connected on one side to the client device 4 and on the other side to the router 6. Therefore, the data upload apparatus 5 is connected in this embodiment between the client device 4 and the router 6. The control unit 5B controls the interfaces 5C, 5D and the cache memory 5A for streaming automatically in the background of the user data received from the client device 4 and cached in the cache memory 5A via a data link comprising the router 6 to the internet storage farm 3 which stores the user data for access by the same or by another user according to assigned access rights. The control unit 5B can comprise one or several microprocessors for executing a data upload control program in the background. In a possible embodiment the data is streamed to a server having a certain IP address. This IP address of the server such as a RAID server within the internet storage farm 3 can be allocated dynamically by the internet service provider of the user or stored in a static manner in a configuration memory of the data upload apparatus 5. In a further embodiment as shown in Fig. 10 the cache memory 5A is integrated in the data upload apparatus 5. The cache memory 5A can in a possible embodiment comprise a non-volatile memory. In a preferred embodiment the non-volatile memory is a flash memory. The interfaces 5C, 5D as shown in the embodiment of Fig. 10 can provide a wireless or a wired link to the client device 4 and the router 6. In an alternative embodiment the control unit 5B can comprise an ASIC control unit. In a possible embodiment the user data is uploaded by the data upload apparatus 5 in data packets as payload data wherein the header data of the data packets comprises a destination address of the RAID server within the internet storage farm 3.

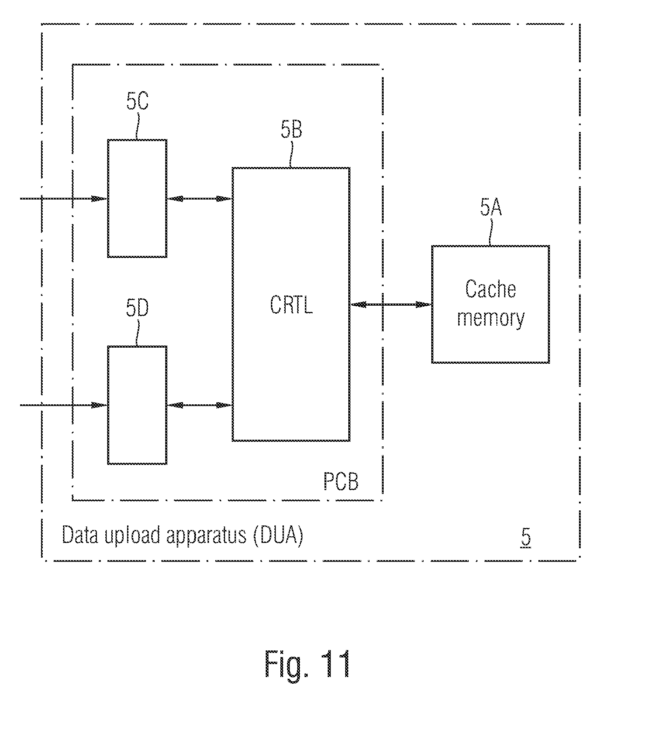

Fig. 11 shows a block diagram of a further possible embodiment of a data upload apparatus 5 according to the present invention. In the embodiment shown in Fig. 11 the first interface 5C and the second interface 5D as well as the control unit 5B can be mounted on the same printed circuit board PCB to which a cache memory 5A can be connected for example by inserting the cache memory 5A into a slot of the printed circuit board PCB. In a possible embodiment the cache memory 5A can be inserted into the data upload apparatus 5. In a possible embodiment the cache memory 5A is provided within a memory card which can be inserted into the data upload apparatus 5. This memory card can be for example a SIM card for a mobile phone.

The data upload apparatus 5 as shown in the embodiments of Figs. 10 and 11 can be in a possible embodiment an apparatus of its own such as a setup box. In alternative embodiments the data upload apparatus 5 as shown in the embodiments of Figs. 10, 11 can be integrated in a client device 4 as shown for instance in Fig. 8. In a further possible embodiment the data upload apparatus 5 can be integrated in a router 6 such as shown in the embodiment of Fig. 7. Furthermore it is possible that the data upload apparatus 5 is integrated in other devices such as a switching device or a bridging device. The data upload apparatus 5 can also be integrated in a gateway or a firewall device.

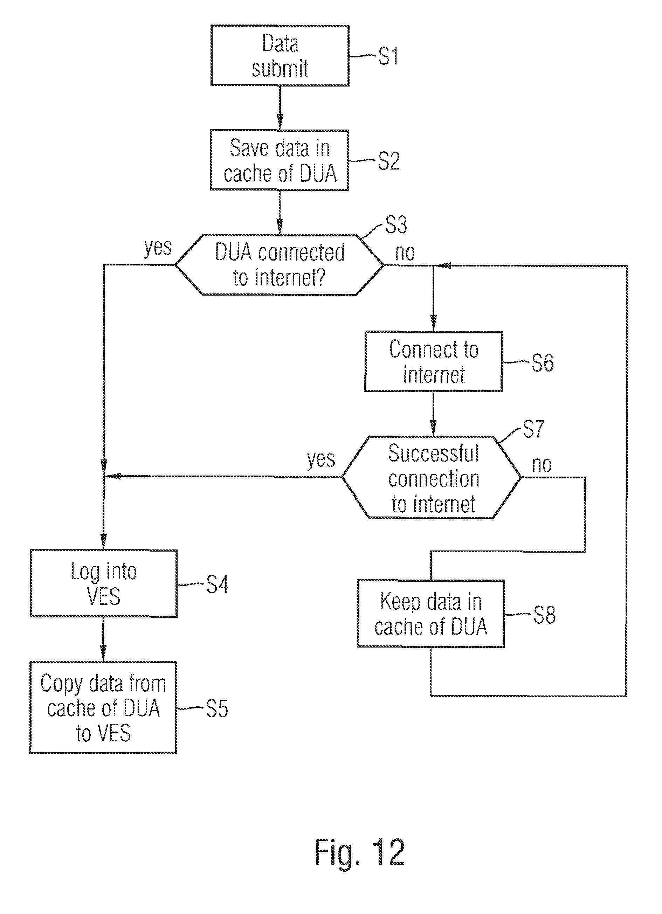

Fig. 12 shows a flowchart of a possible embodiment of a method for performing a data upload of user data to a virtual external storage VES according to the present invention.

In a first step S1 user data is submitted by a client device 4-i of the user. This data can be loaded from a local data memory of the respective client device 4. In an alternative embodiment this user data can be read from a data carrier by means of a reading unit of the client device 4.

The submitted user data is stored in step S2 temporarily in a cache memory 5A of the data upload apparatus 5.

In a further step S3 the control program checks whether the data upload apparatus 5 is connected to the internet 7. If the data upload apparatus 5 is connected to the internet a login into the internet storage farm 3 is performed in step S4 using the IP address of the server of the internet storage farm 3 as set in the configuration data of the data upload apparatus 5. The upload process into the internet storage farm 3 can be password-protected, i. e. the user has to authenticate himself at the server of the internet storage farm 3.

In a further step S5 the user data is then copied from the cache memory 5A of the data upload apparatus 5 to the assigned memory space of the user within the internet storage farm 3 by streamlining the cached user data from the internet 7 to the server of the internet storage farm 3. After the data copying process has been completed the data upload apparatus 5 can in a possible embodiment receive an acknowledgement signal from the server of the internet storage farm 3 indicating that the upload process has been completed. This acknowledgement signal can be forwarded by the data upload apparatus 5 to the client device 4 of the user.

If in step S3 it is detected that the data upload apparatus 5 is not yet connected to the internet the control program of the data upload apparatus 5 connects the data upload apparatus 5 to the internet 7 in step S6 automatically. If in step S7 it is observed that the connection to the internet has been successfully accomplished the login process to the server of the internet storage farm in step S4 is performed. If a connection to the internet can not be established in step S7 the data stored in the cache memory 5A of the data upload apparatus 5 is kept in step S8 and the control program tries to connect the data upload apparatus 5 again in step S6 to the internet 7. Accordingly, the data upload apparatus 5 tries to connect itself to the internet 7 to perform a login process to the server 3 of the internet storage farm 3 until the connection to the internet and the login process can be successfully accomplished. In a possible embodiment a timer or a counter can be provided which indicates a predetermined time within which the connection and login process has to be achieved before the connection and login process is terminated.

The upload data control process as shown in Fig. 12 can be triggered by different events. In a possible embodiment the upload process starts after the user has given a corresponding command into a user interface of the client device 4 or input a corresponding command to data upload apparatus 5. In a possible embodiment the data upload apparatus 5 according to the present invention comprises also a user interface for inputting commands by the user 2 into the data upload apparatus 5. In a further embodiment the data upload apparatus 5 looks into the local data memory of the client device 4 to detect user data which is to be stored into the internet storage farm 3. In a possible embodiment the user can classify data as data to be stored in internet storage farm 3. If the data upload apparatus 5 detects data of this class it automatically performs an upload of this data to the internet storage farm 3. A further possible triggering event for initiating the upload data process of Fig. 12 is when the client device 4 is connected to the interface circuit 5C of the data upload apparatus 5. If for instance a client device 4 is plugged into interface 5C of the data upload apparatus 5 the data upload process 12 as shown in Fig. 12 is initiated. The connection of the client device 4 to the data upload apparatus 5 can be provided by a cable (USB, eSATA etc.).

In a possible embodiment of the data upload apparatus 5 an encryption unit can be provided for encrypting the user data before uploading the data to the internet storage farm 3. In a possible embodiment the user data is stored in the cache memory 5A before it is supplied to the encryption unit which transmits the encrypted user data via the internet 7 to the internet storage farm 3. The encryption can be performed in a possible embodiment by an asymmetric encryption technique. In an alternative embodiment a symmetric encryption algorithm is employed.

In a preferred embodiment the control process as shown in Fig. 12 is performed by the control unit 5B as shown in Figs. 10, 11. The control process shown in Fig. 12 can form a part of upload application program provided to the user 2 and the client device 4.

In a possible embodiment the bandwidth allocated for uploading and downloading via the data link between the client device 4 and the network 7 can be static. In an alternative embodiment the bandwidth for uploading data and downloading data via the data link can be adjusted dynamically. In a further embodiment the data upload apparatus 5 according to the present invention comprises a monitoring unit monitoring the data rate of the user data uploaded to the internet 7. In a possible embodiment the monitoring unit increases the memory space for caching user data if the detected or measured data rate for upload data is diminished. In this embodiment an overflow of the cache memory 5A is avoided. In a further possible embodiment the monitoring unit of the data upload apparatus indicates the available data rate for uploading data to the client device 4 so that the transmission of upload user data from the client device 4 to the cache memory 5A can be controlled by the client device 4 accordingly to avoid an overflow of the cache memory 5A. In this embodiment the client device 4 can adapt the upload data rate for transmitting user data to the data upload apparatus 5 to the available data rate or bandwidth of the data link between the data upload apparatus 5 and the internet 7. In an alternative embodiment an overflow of the cache memory is a avoided in that the data upload apparatus 5 since a feedback control signal to the client device 4 for diminishing the speed of data transmission from the local data memory of the client device 4 to the data upload apparatus 5 to avoid an overflow of the cache memory 5A. In a possible embodiment the cache memory 5A operates as a FIFO (first in first out) memory. Under normal circumstances the data copy process of the user data from the local memory of the client device 4 to the cache memory 5A can be performed at a high data rate. After the user data has been copied to the cache memory 5A the client device 4 can be switched-off by the user 2 or the application program for performing the data upload can be terminated by the user 2 on the client device 4. After that the data upload apparatus 5 according to the present invention performs the further steps of the data upload process automatically without that it is necessary that the user 2 is aware of this data upload process. In a possible embodiment a light emitting diode LED is controlled by the control unit 5B which indicates the data upload process is in progress to the user 2. If the light emitting diode LED terminates to emit light the user 2 knows that the upload process of his user data has been successfully terminated.

## Claims

1. A data upload apparatus (5) for providing a user with a virtual external storage (VES) for storing data,
said data upload apparatus (5) comprising:
(a) at least one cache memory (5A) for caching temporarily user data provided by a client device (4) of said user, and
(b) a control unit (5B) for streaming automatically in the background said user data cached in said cache memory (5A) via a data link to an internet storage farm (3) which stores said user data for access by the same or by another user according to access rights.

2. The data upload apparatus according to claim 1,
wherein said user data cached in said cache memory (5A) is provided by the client device (4) of said user via an interface between said client device (4) and said data upload apparatus (5).

3. The data upload apparatus according to claims 1 and 2,
wherein said data upload apparatus (5) is connected via the interface to the client device (4) of the user or wherein said data upload apparatus (5) is integrated in said client device (4) of the user.

4. The data upload apparatus according to claims 1 to 3,
wherein said control unit (5B) streams the user data in the background via the data link to the internet storage farm (3) having a server connected to a plurality of data memories,
wherein the IP address of said server is stored as configuration data in a memory of said data upload apparatus (5) or in a memory card insertable into said data upload apparatus (5).

5. The data upload apparatus according to claims 1 to 4,
wherein said cache memory (5A) is a non-volatile flash-memory.

6. The data upload apparatus according to claim 1,
wherein said data upload apparatus (5) is connected to a router (6) which links the client device (4) of said user to the internet (7), or
wherein said data upload apparatus (5) is integrated in a router (6) which links said client device (4) of said user to the internet (7).

7. The data upload apparatus according to claims 1 to 6,
wherein said cache memory (5A) is integrated in said data upload apparatus (5) or is provided in a memory card insertable in said data upload apparatus (5).

8. The data upload apparatus according to claims 2 to 7,
wherein said client device (4) is a mobile or a not mobile device connected by a wireless or a wired link via a router (6) and the internet (7) to said internet storage farm (3) .

9. The data upload apparatus according to claims 1 to 8,
wherein the data upload apparatus (5)comprises an encryption unit which encrypts the cached user data before streaming said user data to said internet storage farm (3).

10. The data upload apparatus according to claim 1 to 9,
wherein said user data of a user stored in said internet storage farm (3) is downloadable by a client device (4) of the same user or by a client device of another user via an access network (9) connected to the internet (7).

11. A method for performing a data upload of a user data to a virtual external storage (VES),
the method comprising the steps of:
storing user data of a user provided by a client device (4) of the user in a cache memory (5A) of a data upload apparatus (5); and
streaming the user data stored in said cache memory (5A) of the data upload apparatus (5) automatically to an internet storage farm (3) which stores the user data permanently for access by the same or by another user according to access rights.

12. The method according to claim 11,
wherein the access right to access user data of the user stored in the internet storage farm (3) are assigned by the user or by the provider of the internet storage farm (3).

13. A content data sharing system for sharing content data between users comprising at least one data upload apparatus (5) according to claims 1 to 12.

14. The system according to claim 13,
wherein each user has at least one client device (4) connected a data upload apparatus (5) according to claims 1 to 12.

15. A computer program comprising instructions for performing the method according to claims 11 and 12.
